# EUROPÄISCHE PATENTSCHRIFT

(11) **EP 1 379 058 B1**
(45) Veröffentlichungstag und Bekanntmachung des Hinweises auf die Patenterteilung: **07.12.2005**
(21) Anmeldenummer: 02014718.7
(22) Anmeldetag: 03.07.2002
(51) Int. Cl.: H04M 1/05, H04M 1/60, H04M 1/67, H04B 1/38

(54) **Tragehilfe für mobiles Endgerät**
Carrying aid for a mobile terminal
Support de transport pour un terminal mobile

(43) Veröffentlichungstag der Anmeldung: 07.01.2004
(73) Patentinhaber: SIEMENS AKTIENGESELLSCHAFT, 80333 München (DE)
(72) Erfinder: Feil, Henry, 81545 München (DE)

(56) Entgegenhaltungen:
- EP-A- 1 211 872
- EP-A- 1 223 682
- GB-A- 2 320 397
- US-A- 4 484 029

## Beschreibung

Die vorliegende Erfindung betrifft eine Tragehilfe für ein mobiles Endgerät und ein mobiles Endgerät in Verbindung mit einer Tragehilfe.

Derartige Tragehilfen können grundsätzlich bei jeder Art von mobilen Endgeräten eingesetzt werden.

Mobile Endgeräte, insbesondere Mobilfunk-Endgeräte, werden immer kleiner ausgebildet. Bei der fortschreitenden Miniaturisierung wird es jedoch immer schwieriger, notwendige Tasten und Schalter im hinsichtlich der Größe durch die Konstruktion begrenzten Gehäuse unterzubringen.

Bei bekannten Lösungen sind sämtliche Funktionstasten durch eine Steuerung per Sprache ersetzt worden. Dabei besteht jedoch das Problem, dass das mobile Endgerät zuerst einmal aktiviert bzw. nach dem Gebrauch deaktiviert werden muss, um die Funktionen über eine Sprachwahl aktivieren zu können.

Des Weiteren ist es auch bekannt von EP 1 223 682 und EP1 211 872, mobile Endgeräte, insbesondere Mobilfunk-Endgeräte, als Anhänger um den Hals zu tragen. Befestigt wird das Mobilfunk-Endgerät an einem Halsband. Ein mobiles Endgerät wird in der Regel über einen mechanischen Taster ausgeschaltet. Da die Funktion des Tasters im Allgemeinen kontextgesteuert, d.h. in Abhängigkeit vom jeweiligen Menü bzw. Zustand ist, muss der Benutzer oftmals die Ausgabeeinheit zu Hilfe nehmen, um sicher zu stellen, dass das mobile Endgerät tatsächlich auf die Eingaben des Anwenders reagiert, beispielsweise, falls eine Tastensperre eingeschaltet ist, und eine derartige Aktion nicht möglich ist.

Der vorliegenden Erfindung liegt daher die Aufgabe zugrunde, eine Tragehilfe und ein mobiles Endgerät bereitzustellen, welche bei gleichbleibender Funktionalität eine weitere Miniaturisierung eines mobilen Endgeräts ermöglichen.

Diese Aufgabe wird durch eine Tragehilfe für ein mobiles Endgerät mit den Merkmalen des unabhängigen Patentanspruchs 1 und einem mobilen Endgerät zur Verbindung mit einer Tragehilfe mit den Merkmalen des unabhängigen Patentanspruchs 9 gelöst. Vorteilhafte Weiterbildungen der vorliegenden Erfindung ergeben sich aus den abhängigen Ansprüchen.

Die Tragehilfe für ein mobiles Endgerät weist Mittel zum Tragen des mobilen Endgeräts, wobei das mobile Endgerät an dem Mittel zum Tragen hängt, und Mittel zum Verbinden der Mittel zum Tragen mit dem mobilen Endgerät auf. Die Mittel zum Verbinden weisen einen Schalter auf, durch den eine Aktion in dem mobilen Endgerät initiiert werden kann. Bei dem Mittel zum Tragen handelt es sich bevorzugt um ein multifunktionales Halsband. Bevorzugt sind die Mittel zum Verbinden an dem Mittel zum Tragen befestigt und weisen einen Stecker auf, welcher mit einer Steckerbuchse in dem mobilen Endgerät verbindbar ausgebildet ist.

Das mobile Endgerät zur Verbindung mit einer Tragehilfe weist Mittel zum Verbinden des mobilen Endgeräts mit den Verbindungsmitteln der Tragehilfe auf, wobei das mobile Endgerät an der Tragehilfe hängt, und durch Drehen des mobilen Endgeräts um 180° um die Verbindungsachse eine Aktion in dem mobilen Endgerät initiiert werden kann.

In einer Weiterbildung der vorliegenden Erfindung ist der Schalter in dem Stecker integriert.

Bevorzugt wird die Aktion durch Drehen des mobilen Endgeräts um 180° um die Verbindungsachse initiiert. Ist das mobile Endgerät über seine Steckerbuchse mit dem Stecker der Mittel zum Verbinden verbunden, so kann durch Drehen des mobilen Endgeräts um 180°, d.h. auch des Anteils der Mittel zum Verbinden, die direkt mit dem mobilen Endgerät verbunden sind, das mobile Endgeräts umgeschaltet werden. Befindet sich beispielsweise das mobile Endgerät an der Tragehilfe und hängt dieses um den Hals eines Nutzers, so kann dieser durch einfaches Umdrehen des mobilen Endgeräts das Endgerät aktivieren bzw. deaktivieren. Bevorzugt erfolgt die Initiierung der Aktion durch Drehen des Mobilfunk-Endgeräts bzw. des Schalters um 180°. Denkbar ist jedoch auch, dass eine Initiierung bei einer Drehung in einem höheren bzw. niedrigeren Winkelbereich erfolgt. Bei den Aktionen kann es sich beispielsweise um das tatsächliche Ausschalten des Geräts, oder aber nur das Abschalten des Lautsprechers, Vibrators, Displays handeln, um somit beispielsweise nicht erwünschte eingehende Anrufe zu unterdrücken.

In einer Weiterbildung der vorliegenden Erfindung enthält die Tragehilfe ein Identifikationsmittel, welches gewährleistet, dass nur ein autorisiertes Endgerät mit der Tragehilfe betrieben werden kann. Bevorzugt ist das Identifikationsmittel ein integrierter Schaltkreis, welcher eine persönliche Identifikationsnummer (PIN) speichert. Durch diese Erweiterung des Steckers um eine spezielle Kennung, kann ein Betrieb des Endgeräts ohne die Tragehilfe ausgeschlossen werden, wodurch eine Art Diebstahlschutz erreicht wird. In dem Stecker wird zu diesem Zweck ein spezieller integrierter Schaltkreis eingebaut, welcher vom mobilen Endgerät versorgt wird und zur temporären Speicherung einer persönlichen Identifikationsnummer PIN dient. Entsprechend ist auch denkbar, dass sich der integrierte Schaltkreis in dem Endgerät befindet, wobei eine Erkennung durch Mittel in der Tragehilfe erfolgt.

In einer Weiterbildung der vorliegenden Erfindung wird durch Verbinden der Tragehilfe mit dem Endgerät das Endgerät aktiviert. Durch eine Integration des Schalters in den Stecker bzw. in die Steckerbuchse des Endgeräts kann das Endgerät um die entsprechende Funktionalität erweitert werden, ohne dass zusätzlicher Platz im Gehäuse des Endgeräts benötigt wird.

Ein weiterer Vorteil der vorliegenden Erfindung liegt in der einfachen Bedienbarkeit, da durch den Einsatz eines speziellen mechanischen Schalters, auf eine Tastensperre für diesen Schalter verzichtet werden kann, da eine versehentliche Fehlbetätigung ausgeschlossen werden kann. Darüber hinaus kann man auf die Beobachtung der Ausgabeeinheit verzichten, da der Benutzer allein durch die Lage des Endgeräts schnell erkennt, in welchem Zustand sich das Gerät befindet.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine schematische Darstellung eines Ausführungsbeispiels eines mobilen Endgeräts mit einer Tragehilfe;
- Figur 2: eine schematische Darstellung des Ausführungsbeispiels gemäß Figur 1 in zusammengestecktem Zustand;
- Figur 3: eine schematische Darstellung eines Ausführungsbeispiels einer Tragehilfe im deaktivierten Zustand;
- Figur 4: eine schematische Darstellung eines Ausführungsbeispiels einer Tragehilfe im aktivierten Zustand; und
- Figur 5: eine schematische Darstellung eines Ausführungsbeispiels einer Tragehilfe mit mobilem Endgerät an einem Nutzer.

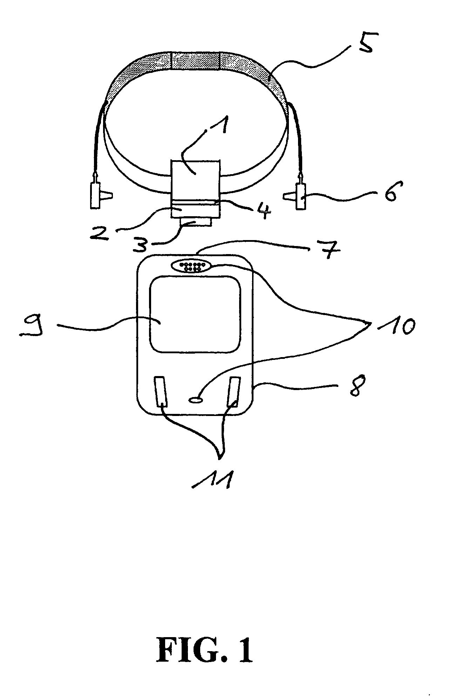

Figur 1 zeigt ein Ausführungsbeispiel einer Tragehilfe 5 und ein mobiles Endgerät 8. Die Tragehilfe 5 umfasst ein multifunktionales Hals- bzw. Trageband. An dem multifunktionalen Hals - bzw. Trageband ist eine elektrische und mechanische Verbindung 1 zum Trageband vorhanden. Diese Verbindung 1 ist durch einen drehbaren Steckerbereich 2 an der Position 4 drehbar ausgebildet. Bei einer Drehung um 180° wird eine Aktion in dem mobilen Endgerät 8 initiiert. An dem unteren Steckerbereich befinden sich Kontaktelemente 3, welche mit einer Steckerbuchse 7 in dem mobilen Endgerät 8 verbunden werden können. Das mobile Endgerät weist des Weiteren ein Anzeigefeld 9, Lautsprecher und Mikrofon 10 und Bedienelemente bzw. Tasten 11 auf. In dem in Figur 1 gezeigten Zustand ist das mobile Endgerät deaktiviert.

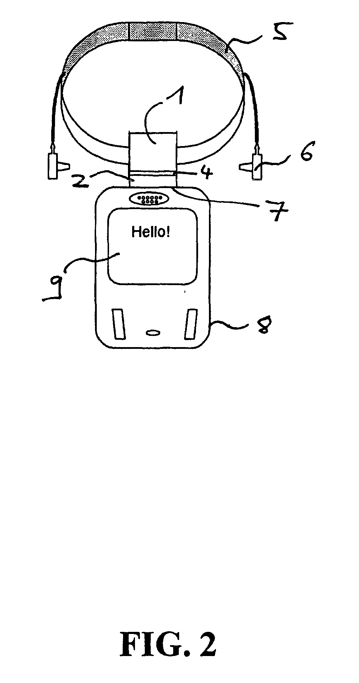

Figur 2 zeigt das Ausführungsbeispiel gemäß Figur 1 im zusammengesteckten Zustand. Gleiche Bezugszeichen haben dabei die selbe Bedeutung wie in Figur 1. Dabei befindet sich der Stecker 3 des Verbindungselements 1 in der Steckerbuchse 7 des mobilen Endgeräts. Durch die Verbindung wurde das mobile Endgerät aktiviert. Eine Aktivierung war in diesem Fall nur dadurch möglich, da die passende Tragehilfe mit dem mobilen Endgerät verbunden wurde.

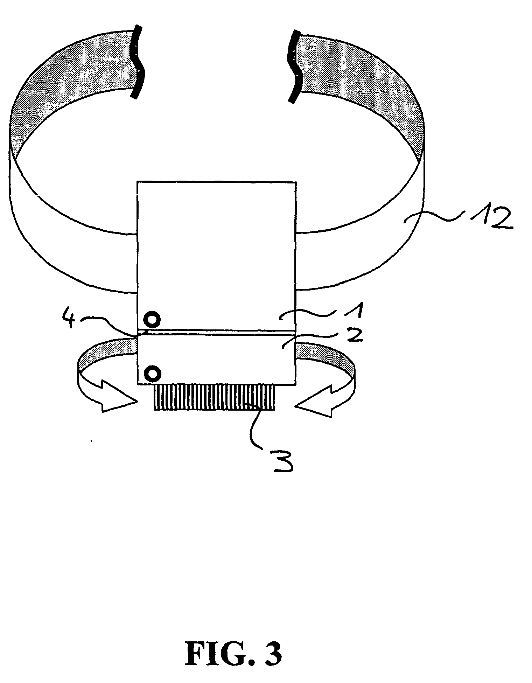

Figur 3 zeigt ein Ausführungsbeispiel der Tragehilfe. Die Tragehilfe umfasst ein Halsband 12, einen oberen, feststehenden Teil des Steckers 1 und einen unteren Steckerbereich 2, welcher als Drehschalter ausgeführt ist. Unterhalb des unteren Bereichs befinden sich die Kontaktelemente 3. Wie durch die Pfeile angedeutet, ist der obere Teil 1 fest mit dem Halsband 12 verbunden. Der untere Steckerbereich 2 kann entsprechend den Pfeilen um 180° gedreht werden.

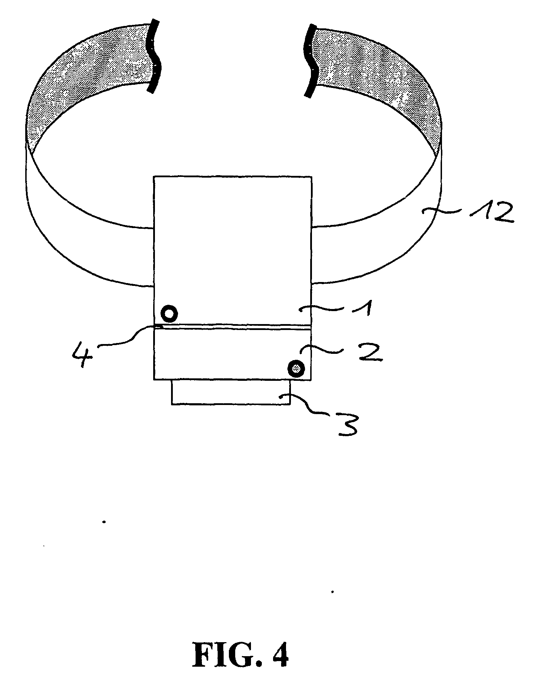

Figur 4 zeigt das Ausführungsbeispiel gemäß Figur 3 im um 180° gedrehten Zustand. Die gleichen Bezugszeichen haben wiederum die gleiche Bedeutung. Der als Drehschalter ausgebildete untere Steckerbereich 2 wurde um 180° gedreht. Dabei ist auch denkbar, dass das Steckergehäuse feststehend ausgeführt ist und die Kontaktelemente drehbar gelagert sind. Weiter ist denkbar, die Steckerbuchse am mobilen Endgerät drehbar auszuführen oder aber auch, ein um jeweils 180° versetztes Einstecken des Steckers mit entsprechender Erkennung durch das mobile Endgerät.

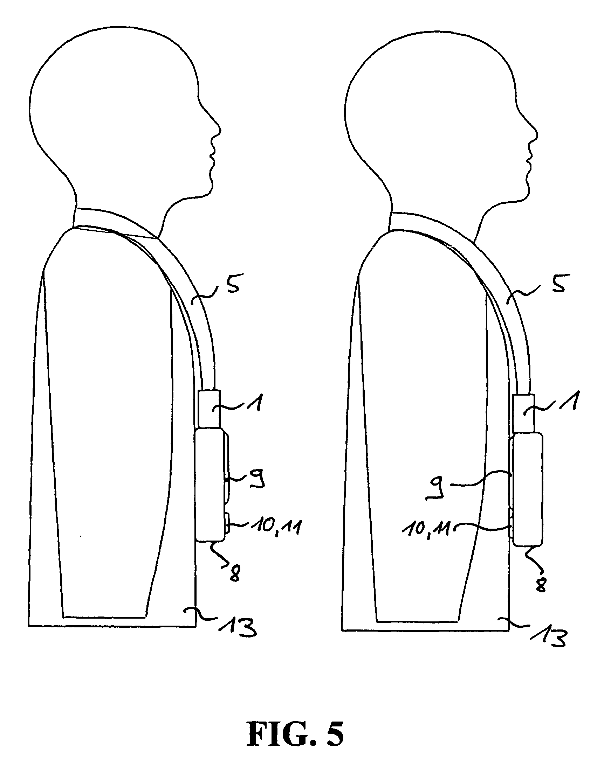

Figur 5 zeigt eine schematische Darstellung einer Tragehilfe mit befestigtem mobilen Endgerät an einem Nutzer 13. Bereits definierte Bezugszeichen haben wiederum dieselbe Bedeutung. Der Nutzer trägt die Tragehilfe 5 um den Hals. An dieser hängt das mobile Endgerät 8. In der linken Darstellung sind die Anzeigevorrichtung 9 und Funktionstasten bzw. Mikrofon und Lautsprecher 9, 10, 11 von der Brust des Anwenders 13 weggewandt, weshalb das mobile Endgerät deaktiviert ist. In der rechen Darstellung wurde das mobile Endgerät um 180° gedreht, d.h., das Endgerät bzw. die Anzeigevorrichtung, Mikrofon, Lautsprecher und Tasten, sind zum Nutzer 13 zugewandt. Durch diese Drehung um 180° wurde das mobile Endgerät deaktiviert.

## Patentansprüche

1. Tragehilfe für ein mobiles Endgerät, aufweisend:
- Mittel (5, 12) zum Tragen des mobilen Endgeräts (8), wobei das mobile Endgerät an den Mitteln zum Tragen hängt,
- Mittel (1, 2, 3, 4) zum Verbinden der Mittel zum Tragen mit dem mobilen Endgerät, und
- Die Mittel zum Verbinden einen Schalter aufweisen, durch den eine Aktion in dem mobilen Endgerät initiiert werden kann,
**dadurch gekennzeichnet, dass**
die Aktion durch ein Umdrehen des mobilen Endgerät um die verbindungsachse initiiert werden kann.

2. Tragehilfe nach Anspruch 1,
**dadurch gekennzeichnet, dass**
die Mittel zum Verbinden an den Mitteln zum Tragen befestigt sind und einen Stecker (3) aufweisen, welcher mit einer Steckerbuchse (7) in dem mobilen Endgerät verbindbar ausgebildet ist.

3. Tragehilfe nach Anspruch 2,
**dadurch gekennzeichnet, dass**
der Schalter in dem Stecker integriert ist.

4. Tragehilfe nach einem der vorhergehenden Ansprüche,
**dadurch gekennzeichnet, dass**
die Aktion durch Drehen des mobilen Endgeräts um 180° um die Verbindungsachse initiiert werden kann.

5. Tragehilfe nach einem der vorhergehenden Ansprüche,
**dadurch gekennzeichnet, dass**
die Tragehilfe ein Identifikationsmittel enthält, welches gewährleistet, dass nur ein autorisiertes Endgerät mit der Tragehilfe betrieben werden kann.

6. Tragehilfe nach Anspruch 5,
**dadurch gekennzeichnet, dass**
das Identifikationsmittel ein integrierter Schaltkreis ist, welcher eine persönliche Identifikationsnummer (PIN) speichert.

7. Tragehilfe nach einem der vorhergehenden Ansprüche,
**dadurch gekennzeichnet, dass**
durch Verbinden der Tragehilfe mit dem Endgerät das Endgerät aktiviert wird.

8. Tragehilfe nach einem der vorhergehenden Ansprüche,
**dadurch gekennzeichnet, dass**
die Tragehilfe einen Lautsprecher aufweist (6), wobei eine elektrische Verbindung zwischen dem Lautsprecher und dem Endgerät über die Mittel zum Verbinden hergestellt wird.

9. Mobiles Endgerät zur Verbindung mit einer Tragehilfe nach einem der vorhergehenden Ansprüche, aufweisend:
- Mittel (7) zum Verbinden des mobilen Endgeräts (8) mit den Verbindungsmitteln (1, 2, 3, 4, 5) der Tragehilfe (5, 12), wobei das mobile Endgerät an der Tragehilfe hängt,
**dadurch gekennzeichnet, dass**
durch ein Umdrehen des mobilen Endgeräts um die Verbindungsachse eine Aktion in dem mobilen Endgerät initiiert werden kann.

10. Mobiles Endgerät nach Anspruch 9,
**dadurch gekennzeichnet, dass**
ein Schalter zum Initiieren der Aktion in der Steckerbuchse (7) des Endgeräts integriert ist.

11. Mobiles Endgerät nach einem der Ansprüche 9 oder 10,
**dadurch gekennzeichnet, dass**
das mobile Endgerät nur mit einer autorisiert Tragehilfe betreibbar ist.

12. Mobiles Endgerät nach Anspruch 11,
**dadurch gekennzeichnet, dass**
das mobile Endgerät zur Prüfung der Autorisierung eine in der Tragehilfe gespeicherte persönliche Identifikationsnummer (PIN) abfragt.

13. Mobiles Endgerät nach einem der Ansprüche 9 bis 12,
**dadurch gekennzeichnet, dass**
durch Verbinden der Tragehilfe mit dem Endgerät das Endgerät aktiviert wird.

## Claims

1. Carrying aid for a mobile terminal, having:
- means (5, 12) for carrying the mobile terminal (8), wherein the mobile terminal hangs on the means for carrying,
- means (1, 2, 3, 4) for connecting the means for carrying to the mobile terminal, and
- the means for connecting have a switch, via which an action can be initiated in the mobile terminal,
**characterised in that**
the action can be initiated by a rotating of the mobile terminal about the axis of connection.

2. Carrying aid according to claim 1,
**characterised in that**
the means for connecting are fastened to the means for carrying and have a plug (3) which is fashioned so as to be connectable to a socket (7) in the mobile terminal.

3. Carrying aid according to claim 2,
**characterised in that**
the switch is integrated in the plug.

4. Carrying aid according to any one of the preceding claims,
**characterised in that**
the action can be initiated by rotating the mobile terminal through 180° about the axis of connection.

5. Carrying aid according to any one of the preceding claims,
**characterised in that**
the carrying means contains an identification means which ensures that only an authorised terminal can be operated with the carrying means.

6. Carrying aid according to claim 5,
**characterised in that**
the identification means is an integrated circuit which stores a personal identification number (PIN).

7. Carrying aid according to any one of the preceding claims,
**characterised in that**
the terminal is activated by connecting the carrying aid to the terminal.

8. Carrying aid according to any one of the preceding claims,
**characterised in that**
the carrying aid has a loudspeaker (6), wherein an electrical connection between the loudspeaker and the terminal is produced via the means for connecting.

9. Mobile terminal for connecting to a carrying aid according to any one of the preceding claims, having:
- means (7) for connecting the mobile terminal (8) to the connecting means (1, 2, 3, 4, 5) of the carrying aid (5, 12), wherein the mobile terminal hangs on the carrying aid,
**characterised in that**
an action in the mobile terminal can be initiated by rotating the mobile terminal about the axis of connection.

10. Mobile terminal according to claim 9,
**characterised in that**
a switch for initiating the action is integrated in the plug socket (7) of the mobile terminal.

11. Mobile terminal according to any one of claims 9 or 10,
**characterised in that**
the mobile terminal can be operated only with an authorised carrying aid.

12. Mobile terminal according to claim 11,
**characterised in that**
in order to check authorisation, the mobile terminal extracts a personal identification number (PIN) stored in the carrying aid.

13. Mobile terminal according to any one of claims 9 to 12,
**characterised in that**
the terminal is activated by connecting the carrying aid to the terminal.

## Revendications

1. Accessoire de support pour un terminal mobile, qui présente:
- un moyen (5, 12) de support du terminal mobile (8) dans lequel le terminal mobile est suspendu au moyen de support,
- des moyens (1, 2, 3, 4) qui relient le moyen de support au terminal mobile et
- les moyens de liaison présentant un commutateur qui permet le déclenchement d'une action dans le terminal mobile,
**caractérisé en ce que** l'action peut être déclenchée par un retournement du terminal mobile autour de l'axe de liaison.

2. Accessoire de support selon la revendication 1,
**caractérisé en ce que**
les moyens de liaison sont fixés au moyen de support et présentent une fiche (3) apte à être reliée à une prise (7) du terminal mobile.

3. Accessoire de support selon la revendication 2,
**caractérisé en ce que**
le commutateur est intégré dans la fiche.

4. Accessoire de support selon l'une des revendications précédentes,
**caractérisé en ce que**
l'action peut être déclenchée par une rotation du terminal mobile de 180° autour de l'axe de liaison.

5. Accessoire de support selon l'une des revendications précédentes,
**caractérisé en ce que**
l'accessoire de support contient un moyen d'identification qui garantit que seul un terminal autorisé peut être actionné au moyen de l'accessoire de support.

6. Accessoire de support selon la revendication 5,
**caractérisé en ce que**
le moyen d'identification est un circuit intégré qui conserve un numéro d'identification personnel (PIN).

7. Accessoire de support selon l'une des revendications précédentes,
**caractérisé en ce que**
le terminal est activé en reliant l'accessoire de support au terminal mobile.

8. Accessoire de support selon l'une des revendications précédentes,
**caractérisé en ce que**
l'accessoire de support présente un haut-parleur (6), les moyens de liaison établissant la liaison électrique entre le haut-parleur et le terminal.

9. Terminal mobile à relier à un accessoire de support selon l'une des revendications précédentes, qui présente:
- un moyen (7) qui relie le terminal mobile (8) aux moyens de liaison (1, 2, 3, 4, 5) de l'accessoire de support (5, 12), le terminal mobile étant suspendu à l'accessoire de support,
**caractérisé en ce qu'**un retournement du terminal mobile autour de l'axe de liaison permet de déclencher une action dans le terminal mobile.

10. Terminal mobile selon la revendication 9,
**caractérisé en ce**
**qu'**un commutateur de déclenchement d'action est intégré dans la prise (7) du terminal mobile.

11. Terminal mobile selon l'une des revendications 9 ou 10,
**caractérisé en ce que**
le terminal mobile ne peut être utilisé qu'au moyen d'un accessoire de support autorisé.

12. Terminal mobile selon la revendication 11,
**caractérisé en ce que**,
pour contrôler l'autorisation, le terminal mobile demande un numéro d'identification personnel (PIN) conservé dans l'accessoire de support.

13. Terminal mobile selon l'une des revendications 9 à 12,
**caractérisé en ce que** le terminal mobile est activé en reliant l'accessoire de support au terminal mobile.
